# EUROPÄISCHE PATENTSCHRIFT

(11) **EP 2 054 257 B1**
(45) Veröffentlichungstag und Bekanntmachung des Hinweises auf die Patenterteilung: **14.09.2011**
(21) Anmeldenummer: 07786039.3
(22) Anmeldetag: 12.07.2007
(51) Int. Cl.: B60K 35/00, B60Q 3/04, G01D 11/28

(54) **ANZEIGEVORRICHTUNG FÜR EIN KRAFTFAHRZEUG MIT EINEM IM WESENTLICHEN PARALLELEN LICHTBÜNDEL**
DISPLAY DEVICE FOR A MOTOR VEHICLE, COMPRISING A SUBSTANTIALLY PARALLEL LIGHT BEAM
DISPOSITIF DE VISUALISATION POUR AUTOMOBILE À FAISCEAU LUMINEUX SENSIBLEMENT PARALLÈLE

(30) Priorität: 14.07.2006 DE 102006033040
(43) Veröffentlichungstag der Anmeldung: 06.05.2009
(73) Patentinhaber: Johnson Controls Automotive Electronics GmbH, 75196 Remchingen (DE)
(72) Erfinder: SÜSS, Manfred, 75196 Remchingen (DE); KAMMERER, Gerhard, 75203 Königsbach (DE); SCHWARZ, Manfred, 71263 Weil der Sadt (DE)
(74) Vertreter: Hemmelmann, Klaus
(86) Internationale Anmeldenummer: PCT/EP2007/006209
(87) Internationale Veröffentlichungsnummer: WO 2008/006593

(56) Entgegenhaltungen:
- EP-A- 1 291 242
- EP-A- 1 541 972
- EP-A- 1 610 099
- DE-A1- 10 160 259
- DE-A1- 19 601 270
- US-A- 5 510 776

## Beschreibung

Die vorliegende Erfindung betrifft eine Anzeigevorrichtung für ein Kraftfahrzeug, insbesondere für ein Kombiinstrument eines Kraftfahrzeugs, mit einer Anzeigefläche und einem eine Lichtsaustrittsfläche aufweisenden Beleuchtungsmittel, wobei das Beleuchtungsmittel ferner eine Lichtquelle aufweist, wobei die Anzeigefläche eine Sichtseite und eine Rückseite aufweist und, wobei das Beleuchtungsmittel auf der Rückseite der Anzeigefläche angeordnet ist.

Eine solche Anzeigevorrichtung ist allgemein bekannt. Beispielsweise ist aus der amerikanischen Patentschrift US 6,827,034 B1 eine Anzeigevorrichtung für ein Kraftfahrzeug bekannt, wobei ein Zifferblatt von hinten beleuchtet wird. Hierbei ist es jedoch nachteilig, dass die Beleuchtung des Zifferblattes entweder direkt hinter dem Zifferblatt vorgesehen ist oder keine ausreichende Abgrenzung des beleuchteten Bereichs vom unbeleuchteten Bereich auf dem Zifferblatt sichtbar ist, so dass die optische Anmutung der Anzeige nachteilig ist. Ein weiter wesentlicher Stand der Technik ist durch US 5,510,776 A1 gegeben.

Aufgabe der vorliegenden Erfindung ist es, eine Anzeigevorrichtung zu schaffen, die es erlaubt, eine optisch ansprechende Anzeige auf der Anzeigevorrichtung zu erzeugen und dennoch einen vergleichsweise großen Abstand des Beleuchtungsmittels von der Anzeigefläche ermöglicht, so dass ein höhere Bauformflexibilität vorhanden ist. Diese Aufgabe wird durch eine Anzeigevorrichtung für ein Kraftfahrzeug, insbesondere für ein Kombiinstrument eines Kraftfahrzeugs, mit einer Anzeigefläche und einem eine Lichtsaustrittsfläche aufweisenden Beleuchtungsmittel gelöst, wobei das Beleuchtungsmittel ferner eine Lichtquelle aufweist, wobei die Anzeigefläche eine Sichtseite und eine Rückseite aufweist, wobei das Beleuchtungsmittel auf der Rückseite der Anzeigefläche angeordnet ist und wobei ein von der Lichtaustrittsfläche ausgehendes Lichtbündel direkt auf die Rückseite der Anzeigefläche fällt, und wobei das Lichtbündel einen Öffnungswinkel von kleiner als etwa 20° aufweist.

Hierdurch ist es möglich, die Lichtaustrittfläche in einem vergleichsweise großen Abstand von der Rückseite der Anzeigefläche anzuordnen und dennoch ein vergleichsweise gut gebündeltes Lichtbündel zu erhalten, welches einen optisch sehr ansprechenden Eindruck auf der Vorderseite der Anzeigefläche bereitstellt.

Erfindungsgemäß ist Vorgesehen, dass der Querschnitt des Lichtbündels quer zur Ausbreitungsrichtung des Lichts quadratisch und/oder dreieckförmig und/oder rechteckförmig und/oder sternförmig und/oder oval ist. Hierdurch ist es möglich einen optischen Eindruck auf der Vorderseite der Anzeigfläche auf die jeweiligen Bedürfnisse abzustimmen und variabel zu halten.

Gemäß der vorliegenden Erfindung ist es Vorgesehen, dass das Beleuchtungsmittel eine Linse aufweist, wobei die Linse die Lichtaustrittsfläche aufweist und wobei die Lichtquelle auf der der Lichtaustrittsfläche abgewandten Seite der Linse angeordnet ist. Hierdurch ist es erfindungsgemäß möglich, mit sehr geringem Aufwand an optischen Lichtleitmaßnahmen dennoch eine gute Bündelung des Lichtbündels zu erreichen.

Erfindungsgemäß ist ferner Vorgesehen, dass das Beleuchtungsmittel ein Linsensystem mit der Linse und einer weiteren Linse aufweist, wobei die weitere Linse zwischen der Linse und der Lichtquelle angeordnet ist. Hierdurch kann mittels der Verwendung zweier Linsen eine besonders gute und optimierte Strahlführung erreicht werden.

Erfindungsgemäß ist besonders bevorzugt, dass der Öffnungswinkel kleiner als etwa 15°, bevorzugt kleiner als etwa 10°, besonders bevorzugt kleiner als etwa 5° vorgesehen ist und ganz besonders bevorzugt, das von der Lichtaustrittsfläche ausgehende Lichtbündel konvergierend oder im wesentlichen parallel ist bzw. verläuft. Für ein im wesentlichen paralleles Lichtbündel müsste als Öffnungswinkel etwa 0° ausgesetzt werden und für ein konvergierendes Lichtbündel müsste ein Öffnungswinkel mit negativen Werten angenommen werden.

Hierdurch kann zum einen die auf der Anzeigefläche sichtbare bzw. von der Vorderseite der Anzeigefläche sichtbare optische Eindruck des Lichtbündels vergleichsweise variabel gestaltet werden und dennoch eine scharfe Abgrenzung zwischen dem beleuchteten Bereich der Anzeigefläche und dem unbeleuchteten Bereich der Anzeigefläche erzielt werden, so dass die Anzeige eine wertige Anmutung aufweist.

Ferner ist erfindungsgemäß bevorzugt, dass die Lichtaustrittfläche in einem Abstand zur Rückseite der Anzeigefläche angeordnet ist, wobei der Abstand zwischen etwa 1 Millimeter und etwa 10 Millimeter beträgt, bevorzugt zwischen etwa 2 Millimeter und etwa 8 Millimeter, besonders bevorzugt zwischen etwa 3 Millimeter und etwa 6 Millimeter. Hierdurch wird eine große Flexibilität hinsichtlich der Bauraumausnutzung geschaffen, wobei dies insbesondere für den Bereich unterhalb der Anzeigefläche gilt, der hinsichtlich der Bauraumausnutzung besonders kritisch ist.

Ferner ist es erfindungsgemäß auch bevorzugt, wenn die Lichtquelle wenigstens eine Leuchtdiode umfasst bzw. wenn die Lichtaustrittsfläche unterhalb der Anzeigefläche um eine auf die Anzeigefläche im wesentlichen senkrecht stehende Drehachse drehbar vorgesehen ist bzw. das Beleuchtungsmittel auf einem Unterflurzeiger angeordnet ist. Hierdurch ist es erfindungsgemäß möglich, die Anzeigevorrichtung zum einen besonders flexibel auf unterschiedlicher Anzeigeerfordernisse einzurichten und zum anderen ist es erfindungsgemäß möglich, einfach und zuverlässig funktionierende Bauelemente wie Leuchtdioden zu verwenden und damit die Anzeigevorrichtung besonders kostengünstig zu gestalten.

Ausführungsbeispiele der vorliegenden Erfindung sind in der Zeichnung dargestellt und in der nachfolgenden Beschreibung näher erläutert.
- **Figur 1**: zeigt eine perspektivische Ansicht der Anzeigevorrichtung mit einer Anzeigefläche.
- **Figur 2**: zeigt eine detailliertere Darstellung im wesentlichen in einer Richtung parallel zur Anzeigefläche der Anzeigevorrichtung.
- **Figuren 3 und 4**: zeigen Darstellungen der Anzeigevorrichtung, die der **Figur 2** entsprechen, jedoch vergrößert dargestellt sind.
- **Figuren 5 und 6**: zeigen in einer perspektivischen Darstellung bzw. in einer Schnittdarstellung ein Ausführungsbeispiel eines Linsensystems für eine erfindungsgemäße Anzeigevorrichtung.

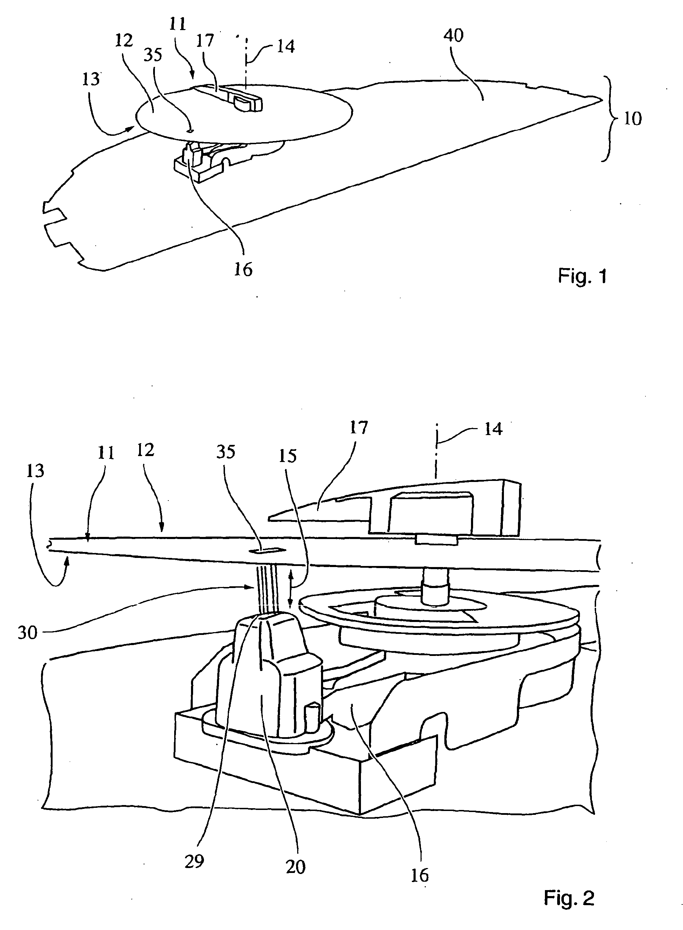

In **Figur 1** ist eine perspektivische Darstellung einer erfindungsgemäßen Anzeigevorrichtung 10 mit einer Anzeigefläche 12 dargestellt. Die Anzeigefläche 12 weist eine Sichtseite 11 bzw. eine Vorderseite 11 auf. Weiterhin weist die Anzeigefläche 12 eine Rückseite 13 auf, welche in Figur 1 mittels eines Pfeils gezeichnet ist. Auf der Vorderseite 11 bzw. der Sichtseite 11 der Anzeigefläche 12 ist ein drehbeweglicher Zeiger 17 als Beispiel für die Darstellung eines Wertes auf der Anzeigefläche 12 abgebildet. Gemäß der vorliegenden Erfindung ist es jedoch nicht erforderlich, dass ein Zeiger 17 auf der Vorderseite der Anzeigfläche 12 vorhanden ist. Der Zeiger 17 ist um eine im wesentlichen senkrecht zur Anzeigefläche 12 verlaufende Drehachse 14 drehbar vorgesehen. Mit dem Bezugszeichen 40 ist ferner eine Leiterplatte bzw. Platine bezeichnet, die der Anzeigevorrichtung 10 zugeordnet ist. Auf der Rückseite 13 der Anzeigefläche 12 befindet sich gemäß einer bevorzugten Ausführung der vorliegenden Erfindung ein Unterflurzeiger 16, an welchem ein Beleuchtungsmittel 20 zur optischen Darstellung einer Information auf der Vorderseite der Anzeigefläche 12 drehbeweglich angeordnet befestigt ist. Hierbei ist der Unterflurzeiger 16 ebenfalls um entweder die Drehachse 14 drehbar oder aber um eine zur Drehachse 14 parallele Achse drehbar.

In **Figur 2** ist eine Detaildarstellung der erfindungsgemäßen Anzeigvorrichtung 10 gemäß einer perspektivischen Darstellung dargestellt. Die Anzeigevorrichtung 10 weist die Anzeigefläche 12 mit ihrer Vordersite 11 bzw. Sichtseite 11 und ihrer Rückseite 13 auf. Gemäß der vorliegenden Erfindung ist auf der Rückseite der Anzeigefläche 12 das Beleuchtungsmittel 20 mit einer Lichtaustrittsfläche 29 angeordnet, wobei das Beleuchtungsmittel 20 ein Lichtbündel 30 abgibt, welches auf die Anzeigefläche 12 von ihrer Rückseite 13 her fällt. Die Anzeigefläche 12 ist zumindest teilweise transparent vorgesehen. Daher ist für einen Benutzer der Anzeigefläche 12 auf ihrer Vorderseite 11 das Lichtbündel 30 als optische Information sichtbar. Das Lichtbündel 30 tritt aus der Lichtaustrittsfläche 29 des Beleuchtungsmittels 20 aus und fällt auf die Rückseite 13 der Anzeigefläche 12, wobei zwischen der Lichtaustrittsfläche 29 und der Anzeigefläche 12 bzw. ihrer Rückseite ein Abstand 15 vorgesehen ist, welcher insbesondere zwischen etwa 1 Millimeter und etwa 10 Millimeter beträgt, bevorzugt zwischen etwa 2 Millimeter und etwa 8 Millimeter, besonders. bevorzugt zwischen etwa 3 Millimeter und etwa 6 Millimeter. Auch gemäß der in **Figur 2** dargestellten Ausführungsform ist das Beleuchtungsmittel 20 auf dem Unterflurzeiger 16 angeordnet und dadurch mit diesem um die Drehachse 14 drehbar. Dieses ist jedoch gemäß der vorliegenden Erfindung nicht zwingend notwendig, denn es könnte das Beleuchtungsmittel auch feststehend sein und unterhalb der Anzeigefläche 12 angeordnet sein.

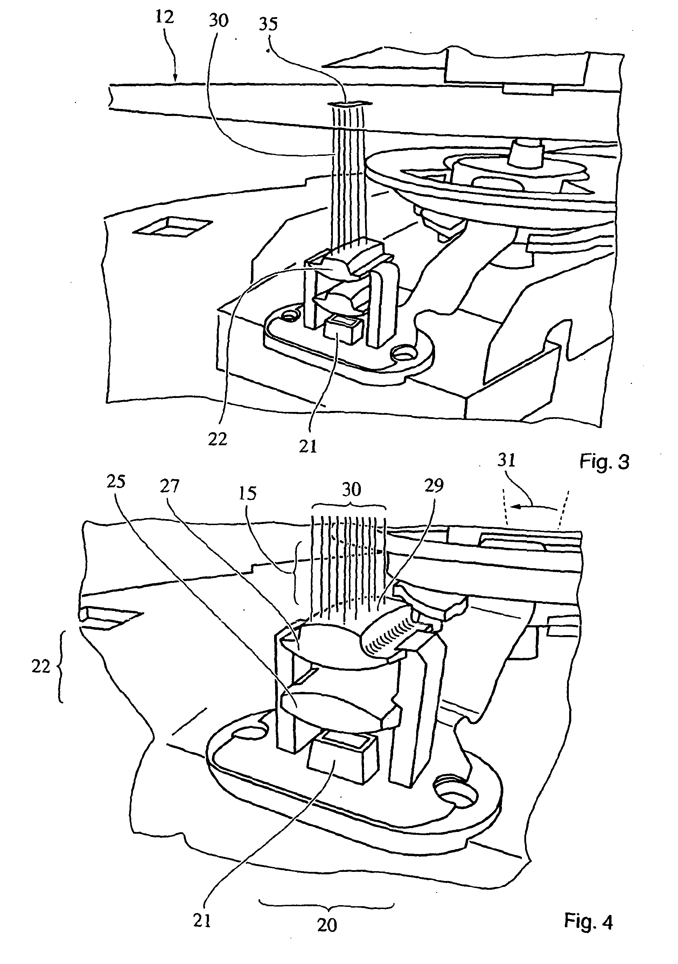

In **Figur 3** ist eine weiter vergrößerte Darstellung der Anzeigevorrichtung 10 in perspektivischer Darstellung dargestellt. Erkennbar ist in dieser Darstellung der auf der Vorderseite der Anzeigefläche 12 durch das Lichtbündel 30 erzeugte Beleuchtungsfleck 35, welcher erfindungsgemäß besonders scharf umrandet vorgesehen ist und daher eine besonders vorteilhafte optische Anmutung aufweist. Ferner ist in **Figur 3** das Beleuchtungsmittel 20 in zumindest teilweise aufgeschnittener Form dargestellt. Hierbei ist sichtbar, dass das Beleuchtungsmittel 20 eine Lichtquelle 21 aufweist, welche insbesondere als eine Leuchtdiode ausgeführt ist oder auch als eine Mehrzahl von Leuchtdioden ausgeführt ist. Oberhalb der Leuchtdioden bzw. der Lichtquelle 21 ist es bei dem Beleuchtungsmittel 20 insbesondere vorgesehen, dass dieses ein Linsensystem 22 aufweist. Das Linsensystem 22 ist in der **Figur 4** in einer besser sichtbaren Detaildarstellung nochmals abgebildet. Erkennbar ist hierin, dass das Lichtbündel 30 ausgehend von der Lichtaustrittsfläche 29 im wesentlichen parallel verlaufend vorgesehen ist. Es kann sich jedoch bei dem Lichtbündel 30 auch um ein leicht divergierendes Lichtbündel handeln, wobei der im rechten oberen Teil der **Figur 4** dargestellte Öffnungswinkel 31 eines solchermaßen leicht divergierenden Lichtbündels 30 bevorzugt kleiner als etwa 20° vorgesehen ist, besonders bevorzugt kleiner als etwa 15°, ganz bevorzugt kleiner als etwa 10°, und im speziellen bevorzugt kleiner als etwa 5° vorgesehen ist. Es kann erfindungsgemäß auch vorgesehen sein, dass das Lichtbündel 30 parallel vorgesehen ist (Öffnungswinkel 0°) oder konvergierend vorgesehen ist (Öffnungswinkel negativ). Das Beleuchtungsmittel weist wiederum das Linsensystem 22 mit einer Linse 27 und einer weiteren Linse 25 auf. Es könnte erfindungsgemäß auch vorgesehen sein (nicht dargestellt), dass lediglich eine Linse 27 in dem Beleuchtungsmittel 20 vorhanden ist bzw. dass die Linse 27 und damit auch die Lichtaustrittfläche 29 in die Leuchtdiode bzw. in die Leuchtdioden der Lichtquelle integriert sind (nicht dargestellt). Aus **Figur 4** wird weiterhin der Abstand 15 zwischen der Lichtaustrittsfläche 29 und der Rückseite 13 der Anzeigefläche 12 deutlich.

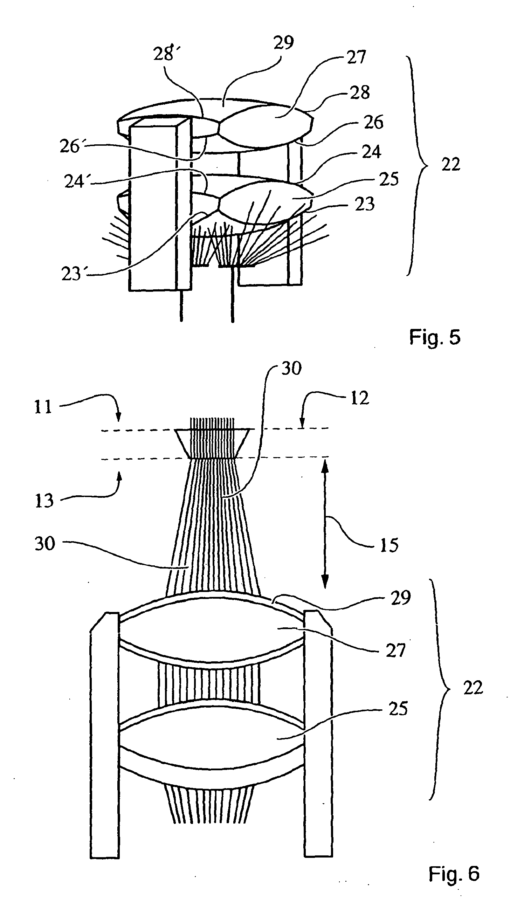

In **Figur 5** ist in perspektivischer Darstellung und in **Figur 6** in einer Schnittdarstellung ein Ausführungsbeispiel des Linsensystems 22 dargestellt. Hierbei ist jeweils die Linse 27 mit ihrer Lichtaustrittfläche 29 sowie die weitere Linse 25 abgebildet. Von der Lichtquelle 21 (in den **Figuren 5** und **6** nicht abgebildet) wird Licht in Richtung nach oben hin emitiert und mittels des Linsensystems 22 zu dem Lichtbündel 30 gebündelt. Hierbei ist aus der **Figur 5** erkennbar, dass die Linse 27 und die weiteren Linse 25 verschiedene Krümmungsradien ihrer Begrenzungsflächen bzw. ihrer Oberflächen aufweisen. Diese Krümmungsradien der Oberflächen der Linse 27 bzw. der weiteren Linse 25 können sich in unterschiedlichen Richtungen der Haupterstreckungsebenen der Linsen 25, 27 ändern. Hierzu ist beispielsweise in der **Figur 5** mit dem Bezugszeichen 28 der Krümmungsradius der Oberseite der Linse 27 entsprechend einer Raumrichtung und mit 28' der Krümmungsradius der Oberseite der Linse 27 in eine hierzu senkrechte Raumrichtung angegeben. Die Oberseite der Linse 27 entspricht hierbei auch der Lichtaustrittsfläche 29. Entsprechend ist mit dem Bezugszeichen 26 der Krümmungsradius der Unterseite der Linse 27 in eine der Raumrichtungen und mit 26' der Krümmungsradius der Unterseite der Linse 27 in die hierzu senkrechte Raumrichtung angegeben. Mit dem Bezugszeichen 24 bzw. 24' sind die Krümmungsradien in unterschiedliche Raumrichtungen der Oberseite der weiteren Linse 25 bezeichnet und mit 23 bzw. 23' sind die Krümmungsradien in unterschiedliche Raumrichtungen der Unterseite der weiteren Linse 25 angegeben. Durch solche Maßnahmen ist es möglich, die Form des Querschnitts des Lichtbündels 30 in eine Richtung quer zur Ausbreitung des Lichtbündels 30 zu variieren, beispielsweise diesen Querschnitt im wesentlichen rechteckförmig zu gestalten oder im wesentlichen quadratisch zu gestalten oder im wesentlichen sternförmig zu gestalten oder im wesentlichen dreieckförmig zu gestalten oder im wesentlichen oval zu gestalten.

In **Figur 6** ist weiterhin die Anzeigefläche 12 angedeutet sowie der Abstand 15 zwischen der Lichtaustrittsfläche 29 und der Unterseite 13 der Anzeigefläche 12.

Besonders bevorzugt ist es gemäß der vorliegenden Erfindung, wenn das Linsensystem 22 bzw. die Linse 27 bzw. die weitere Linse 25 aus einem Kunststoffmaterial, insbesondere mittels eines Spritzgussprozesses bzw. sonstigen kostengünstig darstellbaren Formungsprozesses realisiert ist, so dass ein effizienter Kompromiss zwischen der optischen Güte der Linsenanordnung 22 und dem Preis bzw. den Herstellkosten des Beleuchtungsmittels 22 realisierbar ist und dennoch ein vergleichsweise scharfer Lichtfleck 35 auf der Vorderseite der Anzeigefläche 12 realisierbar ist. Durch den Abstand 15 ist es möglich, dass unterhalb der Anzeigfläche 12 mehr Platz für andere Bauteile wie z. B. Lichtleitkörper oder dergleichen vorhanden ist. Durch die gute Bündelung des Lichtbündels 30 mit entweder einem kleinen Öffnungswinkel 31 oder sogar einer konvergierenden bzw. im wesentlichen parallelen Form des Lichtbündels 30 ist es erfindungsgemäß möglich, dass bei der Anzeige auf der Anzeigefläche 12 ein geringer Anteil an Streulicht anfällt und so ein im wesentlichen gerichteter Lichtstrahl im Innenraum vorlegt. Als Material für die Linsen 25, 27 bzw. für das Linsensystem 22 kommt beispielsweise PMMA oder PC (Polycarbonat) in Frage.

### Bezugszeichenliste

- 10: Anzeigevorrichtung
- 11: Sichtseite der Anzeigefläche
- 12: Anzeigefläche
- 13: Rückseite der Anzeigefläche
- 14: Drehachse
- 15: Abstand
- 16: Unterflurzeiger
- 17: Zeiger
- 20: Beleuchtungsmittel
- 21: Lichtquelle
- 22: Linsensystem
- 23, 24, 23', 24', 26, 28, 26', 28': Krümmungsradien der Linse bzw. der weiteren Linse
- 25: weitere Linse
- 27: Linse
- 29: Lichtaustrittsfläche
- 30: Lichtbündel
- 31: Öffnungswinkel
- 35: Lichtfleck

## Patentansprüche

1. Anzeigevorrichtung (10) für ein Kraftfahrzeug, insbesondere für ein Kombiinstrument eines Kraftfahrzeugs, mit einer Anzeigefläche (12) und einem eine Lichtsaustrittsfläche (29) aufweisenden Beleuchtungsmittel (20), wobei das Beleuchtungsmittel ferner eine Lichtquelle (21) aufweist, wobei die Anzeigefläche (12) eine Sichtseite (11) und eine Rückseite (13) aufweist, wobei das Beleuchtungsmittel (20) auf der Rückseite (13) der Anzeigefläche (12) angeordnet ist, wobei das Beleuchtungsmittel (20) ein Linsensystem (22) mit einer Linse (27) und einer weiteren Linse (25) aufweist, wobei die Linse (27) eine Lichtaustrittsfläche (29) aufweist, wobei die Lichtquelle (21) auf der der Lichtaustrittsfläche (29) abgewandten Seite der Linse (27) angeordnet ist, wobei die weitere Linse (25) zwischen der Linse (27) und der Lichtquelle (21) angeordnet ist, wobei ein von der Lichtaustrittsfläche (29) ausgehendes Lichtbündel (30) direkt auf die Rückseite (13) der Anzeigefläche (12) fällt, wobei das Lichtbündel (30) einen Öffnungswinkel (31) von kleiner als etwa 20° aufweist, **dadurch gekennzeichnet, dass** mittels des Linsensystems die Form des Querschnitts des Lichtbündels (30) quer zur Ausbreitung des Lichtbündels (30) quadratisch oder dreieckförmig oder rechteckförmig oder sternförmig oder oval ausgebildet ist.

2. Anzeigevorrichtung (10) nach Anspruch 1, **dadurch gekennzeichnet, dass** der Öffnungswinkel (31) kleiner als etwa 15°, bevorzugt kleiner als etwa 10°, besonders bevorzugt kleiner als etwa 5° vorgesehen ist.

3. Anzeigevorrichtung (10) nach einem der vorhergehenden Ansprüche, **dadurch gekennzeichnet, dass** das von der Lichtaustrittsfläche (29) ausgehende Lichtbündel (30) konvergierend oder im Wesentlichen parallel ist.

4. Anzeigevorrichtung (10) nach einem der vorhergehenden Ansprüche, **dadurch gekennzeichnet, dass** die Lichtaustrittsfläche (29) in einem Abstand (15) zur Rückseite (13) der Anzeigefläche (12) angeordnet ist, wobei der Abstand (15) zwischen etwa 1 Millimeter und etwa 10 Millimeter beträgt, bevorzugt zwischen etwa 2 Millimeter und etwa 8 Millimeter, besonders bevorzugt zwischen etwa 3 Millimeter und etwa 6 Millimeter.

5. Anzeigevorrichtung (10) nach einem der vorhergehenden Ansprüche, **dadurch gekennzeichnet, dass** die Lichtquelle (21) wenigstens eine Leuchtdiode umfasst.

6. Anzeigevorrichtung (10) nach einem der vorhergehenden Ansprüche, **dadurch gekennzeichnet, dass** die Lichtaustrittsfläche (29) unterhalb der Anzeigefläche (12) um eine auf die Anzeigefläche (12) im Wesentlichen senkrecht stehende Drehachse (14) drehbar vorgesehen ist.

7. Anzeigevorrichtung (10) nach einem der vorhergehenden Ansprüche, **dadurch gekennzeichnet, dass** das Beleuchtungsmittel (20) auf einem Unterflurzeiger (16) angeordnet ist.

## Claims

1. Display device (10) for a motor vehicle, in particular for a combined instrument of a motor vehicle, comprising a display surface (12) and an illumination means (20) having a light exit surface (29), the illumination means further having a light source (21), the display surface (12) having a visible side (11) and a rear side (13), the illumination means (20) being arranged on the rear side (13) of the display surface (12), the illumination means (20) having a lens system (22) with the lens (27) and a further lens (25), the lens (27) having a light exit surface (29), the light source (21) being arranged on the side of the lens (27) averted from the light exit surface (29), the further lens (25) being arranged between the lens (27) and the light source (21), a light beam (30) emanating from the light exit surface (29) falling directly onto the rear side (13) of the display surface (12), and the light beam (30) having an aperture angle (31) of less than approximately 20°, **characterized in that** the shape of the cross section of the light beam (30) is formed transverse to the propagation of the light beam (30) in a square or triangular or rectangular or star-shaped or oval fashion by means of the lens system.

2. Display device (10) according to Claim 1, **characterized in that** the aperture angle (31) is less than approximately 15°, preferably less than approximately 10°, with particular preference less than approximately 5°.

3. Display device (10) according to one of the preceding claims, **characterized in that** the light beam (30) emanating from the light exit surface (29) is convergent or substantially parallel.

4. Display device (10) according to one of the preceding claims, **characterized in that** the light exit surface (29) is arranged at a spacing (15) from the rear side (13) of the display surface (12), the spacing (15) being between approximately 1 millimeter and approximately 10 millimeters, preferably between approximately 2 millimeters and approximately 8 millimeters, with particular preference between approximately 3 millimeters and approximately 6 millimeters.

5. Display device (10) according to one of the preceding claims, **characterized in that** the light source (21) comprises at least one light-emitting diode.

6. Display device (10) according to one of the preceding claims, **characterized in that** the light exit surface (29) is provided below the display surface (12) in a fashion rotatable about a rotation axis (14) substantially perpendicular to the display surface (12).

7. Display device (10) according to one of the preceding claims, **characterized in that** the illumination means (20) is arranged on a subsurface pointer (16).

## Revendications

1. Dispositif d'affichage (10) pour véhicule à moteur, notamment destiné à un tableau de bord d'un véhicule à moteur, comprenant une surface d'affichage (12) et un moyen d'éclairement (20) présentant une surface d'émission lumineuse (29), le moyen d'éclairement comprenant en outre une source de lumière (21), la surface d'affichage (12) comprenant une face de visualisation (11) et une face arrière (13), le moyen d'éclairement (20) étant disposé sur la face arrière (13) de la surface d'affichage (12), le moyen d'éclairement (20) comprenant un système de lentilles (22) comportant une lentille (27) et une lentille supplémentaire (25), la lentille (27) comprenant une surface d'émission lumineuse (29), la source de lumière (21) étant disposée du côté de la lentille (27) qui est tourné à l'opposé de la surface d'émission lumineuse (29), la lentille supplémentaire (25) étant disposée entre la lentille (27) et la source de lumière (21), un faisceau lumineux (30) émanant de la surface d'émission lumineuse (29) étant directement incident sur la face arrière (13) de la surface d'affichage (12), le faisceau lumineux (30) présentant un angle d'ouverture (31) inférieur à environ 20°, **caractérisé en ce que** le système de lentilles confère à la section transversale du faisceau lumineux (30) transversalement à la direction de propagation du faisceau lumineux (30) une forme carrée ou triangulaire ou rectangulaire ou en étoile ou ovale.

2. Dispositif d'affichage (10) selon la revendication 1, **caractérisé en ce que** l'angle d'ouverture (31) est inférieur à environ 15°, de préférence inférieur à environ 10°, et de façon plus particulièrement préférable, inférieur à environ 5°.

3. Dispositif d'affichage (10) selon l'une des revendications précédentes, **caractérisé en ce que** le faisceau lumineux (30) émanant de la surface d'émission lumineuse (29) est convergent ou pratiquement parallèle.

4. Dispositif d'affichage (10) selon l'une des revendications précédentes, **caractérisé en ce que** la surface d'émission lumineuse (29) est disposée à une certaine distance (15) de la face arrière (13) de la surface d'affichage (12), la distance (15) étant comprise entre environ 1 mm et environ 10 mm, de préférence, entre environ 2 mm et environ 8 mm, et de façon plus particulièrement préférable, entre environ 3 mm et environ 6 mm.

5. Dispositif d'affichage (10) selon l'une des revendications précédentes, **caractérisé en ce que** la source de lumière (21) comprend au moins une diode électroluminescente.

6. Dispositif d'affichage (10) selon l'une des revendications précédentes, **caractérisé en ce que** la surface d'émission lumineuse (29) est prévue de façon à pouvoir tourner en dessous de la surface d'affichage (12) autour d'un axe de rotation (14) sensiblement perpendiculaire à la surface d'affichage (12).

7. Dispositif d'affichage (10) selon l'une des revendications précédentes, **caractérisé en ce que** le moyen d'éclairement (20) est disposé sur un afficheur encastré (16).
